# EUROPEAN PATENT APPLICATION

(11) **EP 4 752 438 A1**
(43) Date of publication of application: **03.06.2026**
(21) Application number: 24849348.8
(22) Date of filing: 10.06.2024
(51) Int. Cl.: F24C 3/12, F24C 7/08, F24C 15/04, F24C 15/00, G03B 11/04, G03B 17/02, H04N 23/57

(54) **COOKING APPARATUS**

(30) Priority: 31.07.2023 KR 20230099522
(71) Applicant: LG Electronics Inc., Yeongdeungpo-gu Seoul 07336 (KR)
(72) Inventor: LEE, Yong Hyun, Seoul 08592 (KR); PARK, Kyoung Joon, Seoul 08592 (KR); LEE, Sangcheol, Seoul 08592 (KR); YANG, Hak Soon, Seoul 08592 (KR)
(74) Representative: Ter Meer Steinmeister & Partner
(86) International application number: PCT/KR2024/007882
(87) International publication number: WO 2025/028777

(57) **Abstract**

An invention related to a cooking apparatus is disclosed. The disclosed invention comprises: a camera arranged between outer glass and inner glass of a door; and a light-blocking member that blocks a portion of the travel path of light traveling from the outer glass to the inner glass, wherein the light-blocking member includes: a first light-blocking portion that blocks between the outer glass and the inner glass; an opening portion that opens a portion of the first light-blocking portion; and a second light-blocking portion that blocks between the outer glass and the opening portion.

## Description

### TECHNICAL FIELD

The present disclosure relates to a cooking appliance, and more particularly, to a cooking appliance including a camera for imaging an inside of a cooking chamber.

### BACKGROUND

A cooking appliance is one of home appliances for cooking food, and is a device installed in a kitchen space and used to cook food according to an intention of a user. Such a cooking appliance may be variously classified according to a heat source, a shape, or a type of fuel used.

When the cooking appliance is classified according to a type of cooking food, the cooking appliance may be classified into an open-type cooking appliance and a closed-type cooking appliance depending on a shape of a space on which food is placed. The closed-type cooking appliance includes an oven, a microwave oven, and the like, and the open-type cooking appliance includes a cooktop, a hob, and the like.

A closed-type cooking appliance is a cooking appliance configured to shield a space in which food is located and to heat the shielded space to cook food. In the closed-type cooking appliance, a chamber, that is, a cooking chamber, which is a space shielded when food is placed and when the food is intended to be cooked, is provided inside a main body. The cooking chamber becomes a space in which the food is substantially cooked. In the closed-type cooking appliance, a door for selectively opening and closing the cooking chamber is provided to be pivotable. The door is pivotably installed on a main body in which the cooking chamber is formed by a door hinge provided between the main body and the door. The door may selectively open and close the cooking chamber by pivoting about a portion coupled to the main body through the door hinge.

A heat source is provided in an inner space of the cooking chamber that is opened and closed by the door so as to heat the cooking chamber. As the heat source, a gas burner, an electric heater, or the like may be used.

Recently, closed-type cooking appliances including an embedded camera have been developed. Such cooking appliances may obtain an image related to food accommodated inside the cooking chamber through the embedded camera. The image obtained by the embedded camera may be used to be displayed through a display provided in the cooking appliance or through a smart device of a user, and may be used as data for controlling a cooking operation of the cooking appliance.

When the image obtained by the embedded camera is used as data for controlling the cooking operation of the cooking appliance, the cooking appliance may analyze an image related to food obtained by the embedded camera to determine a type of the food or to determine a cooking progress degree of the food, and may control the cooking operation of the cooking appliance based on information analyzed in this manner.

An embedded camera providing the above-described function should be arranged at a position suitable for imaging an inside of a cooking chamber. To this end, the embedded camera is arranged at a position adjacent to the cooking chamber. For example, the embedded camera is generally arranged above a cavity forming the cooking chamber, or arranged inside a door facing the cooking chamber.

When the embedded camera is arranged inside the door, the embedded camera is typically arranged between a pair of glasses forming a transparent window of the door.

In general, the door includes a transparent window, and a user may check a state inside the cooking chamber from outside the cooking appliance through the transparent window. The transparent window may be formed by a single glass depending on a function provided by the cooking appliance, or may be formed by a combination of two or more glasses.

When the transparent window is formed by two or more glasses to improve thermal insulation performance of the door, the transparent window may be formed by a combination of an outer glass arranged at a foremost front side of the transparent window and at least one inner glass arranged at a rear side of the outer glass.

In the door including the transparent window formed as described above, the embedded camera is arranged in a space between the outer glass and the inner glass. The embedded camera arranged inside the door as described above receives light passing through the inner glass from inside the cooking chamber and images the inside of the cooking chamber.

When the embedded camera is arranged inside the door as described above, quality of an image captured by the camera may be degraded due to light emitted from an external light source. In addition, quality of an image captured by the camera may be degraded due to light emitted from internal lighting of the oven.

For example, light emitted from the external light source may pass through the outer glass and then be reflected by the inner glass. In addition, light emitted from the internal lighting of the oven may be reflected by the inner glass.

When such reflected light is captured by the embedded camera, problems may occur in that image quality of an image captured by the embedded camera is degraded, such as light blooming, flare phenomena, virtual images, and the like appearing in the image captured by the embedded camera.

### SUMMARY

### Technical Problems

An object of the present disclosure is to provide a cooking appliance having an improved structure so that quality of an image captured by a camera is less affected by light emitted from an external light source.

Also, another object of the present disclosure is to provide a cooking appliance having an improved structure so that occurrence of light reflection due to an external light source is effectively blocked while reduction of a viewing area of a transparent window is suppressed.

Also, another object of the present disclosure is to provide a cooking appliance having an improved structure so that a camera imaging a cooking chamber is less affected by heat.

Also, another object of the present disclosure is to provide a cooking appliance having an improved structure so that cooling of a camera installed inside a door may be effectively performed.

Also, another object of the present disclosure is to provide a cooking appliance having an improved structure so that occurrence of light reflection due to an auxiliary light source is effectively blocked while cooling of a camera may also be effectively performed.

### Technical Solutions

A cooking appliance according to one embodiment of the present disclosure for achieving the above-described objects includes a camera arranged between an outer glass and an inner glass of a door, and a light-blocking member blocking a part of a movement path of light moving from the outer glass to the inner glass, and the light-blocking member includes a first light-blocking part blocking between the outer glass and the inner glass, and a second light-blocking part arranged between the outer glass and the first light-blocking part and blocking between the outer glass and the inner glass at an upper side or a lower side of the first light-blocking part.

Also, another embodiment of the present disclosure includes a camera arranged between an outer glass and an inner glass of a door, and a light-blocking member blocking a part of a movement path of light moving from the outer glass to the inner glass, and the light-blocking member includes a first light-blocking part blocking between the outer glass and the inner glass, an opening part opening a portion of the first light-blocking part, and a second light-blocking part blocking between the outer glass and the opening part.

Also, another embodiment of the present disclosure includes a camera arranged between an outer glass and an inner glass of a door, and a light-blocking member blocking a part of a movement path of light moving from the outer glass to the inner glass, and at least a part of the light-blocking member is arranged between the camera and the inner glass.

Also, another embodiment of the present disclosure includes a camera arranged between an outer glass and an inner glass of a door, and a light-blocking member blocking a part of a movement path of light moving from the outer glass to the inner glass, and at least a part of the light-blocking member is arranged at a position closer to the inner glass than to the outer glass.

A cooking appliance according to one aspect of the present disclosure may include: a main body forming a cooking chamber therein; a door opening and closing the cooking chamber at a front side of the main body and including an outer glass arranged at the front side of the main body and an inner glass arranged between the main body and the outer glass; a camera arranged in an accommodation space formed between the outer glass and the inner glass; and a light-blocking member arranged adjacent to the camera and blocking a part of a movement path of light moving from the outer glass to the inner glass.

Also, the light-blocking member may include: a first light-blocking part arranged in the accommodation space and blocking between the outer glass and the inner glass; and a second light-blocking part arranged between the outer glass and the first light-blocking part and blocking between the outer glass and the inner glass at an upper side or a lower side of the first light-blocking part.

Also, the first light-blocking part and the second light-blocking part are preferably arranged to be spaced apart from each other in a front and rear direction.

Also, the light-blocking member may further include an opening part opening between the first light-blocking part and the second light-blocking part in an up-down direction.

Also, the door is provided with an inlet opening an inside of the door and an exhaust port opening the inside of the door at an upper side of the inlet, and the light-blocking member is preferably arranged between the inlet and the exhaust port.

Preferably, the opening part may include a first opening part opening between the outer glass and the first light-blocking part in an up-down direction, and a second opening part opening between the first light-blocking part and the second light-blocking part in the up-down direction at an upper side or a lower side of the first opening part.

Also, the light-blocking member is preferably arranged below the camera.

Also, in the up-down direction, the second opening part is preferably arranged between the camera and the first light-blocking part.

Also, the first light-blocking part is preferably arranged to block an external light movement path, which is a movement path of light moving from the front side of the outer glass to an area in which a field of view of the accommodation space and the camera overlap.

Also, the second light-blocking part is preferably arranged to block a portion of the external light movement path that is opened by the opening part.

Also, the first light-blocking part is preferably arranged at a lower side of the camera and forms an inclined surface that becomes farther downward from the camera toward a rear side.

Also, in a front and rear direction, at least a part of the first light-blocking part is preferably arranged between the camera and the inner glass.

Also, in the front and rear direction, at least a part of the first light-blocking part is preferably arranged at a position closer to the inner glass than to the outer glass.

Also, the light-blocking member may further include an opening part penetrating a portion of the first light-blocking part in the front and rear direction or in an up-down direction.

Also, the opening part is preferably arranged at a position closer to an upper end than to a lower end of the first light-blocking part.

Also, the second light-blocking part is preferably arranged at a position closer to an upper end than to a lower end of the first light-blocking part and is arranged to block between the outer glass and the opening part.

Also, the light-blocking member may further include an opening part penetrating a portion of the first light-blocking part in the front and rear direction.

Also, the second light-blocking part is preferably arranged to block between the outer glass and the opening part.

Also, the light-blocking member may further include an upper surface part arranged between the outer glass and the first light-blocking part at an upper side of the opening part.

Also, the second light-blocking part is preferably arranged in a space surrounded by the outer glass, the upper surface part, and the first light-blocking part.

Also, the light-blocking member may further include a side surface part connecting the upper surface part and the first light-blocking part at a lateral side of the first light-blocking part.

Also, the second light-blocking part is preferably connected to at least one of the upper surface part and the side surface part.

### Advantageous Effects

According to the present disclosure, the present disclosure may provide an effect of blocking occurrence of light reflection in an area in which light emitted from an external light source has a high possibility of being captured by the camera when the light emitted from the external light source is reflected, thereby causing quality of an image captured by the camera to be less affected by the light emitted from the external light source and allowing quality of the image captured by the camera to be improved.

Also, the cooking appliance of the present embodiment may minimize reduction of a viewing area of a transparent window due to the light-blocking member, and may allow checking of cooking food through the transparent window to be effectively performed, and may also minimize degradation of front appearance of the cooking appliance due to existence of the light-blocking member.

Also, the cooking appliance of the present embodiment may allow the camera to operate in an environment in which the camera is less affected by heat, thereby significantly reducing a risk of malfunction or damage of the camera 50.

Also, the cooking appliance of the present embodiment may allow a flow of air moving inside the door to smoothly pass through the light-blocking member, thereby allowing cooling of the camera arranged around the light-blocking member inside the door to be effectively performed.

Also, the cooking appliance of the present embodiment may significantly reduce a risk of malfunction or damage of the camera and effectively improve quality of an image captured by the camera by together providing an effect of efficiently blocking occurrence of light reflection in an overlapping area S1 and an effect of efficiently improving cooling performance for the camera.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view showing a cooking appliance according to one embodiment of the present disclosure;
FIG. 2 is a side cross-sectional view illustrating an internal structure of the cooking appliance illustrated in FIG. 1;
FIG. 3 is a side cross-sectional view illustrating the door illustrated in FIG. 2 in a separated state;
FIG. 4 is an enlarged view illustrating an enlarged portion IV of FIG. 3;
FIG. 5 is a view comparing a structure around a camera of the cooking appliance according to one embodiment of the present disclosure with a structure around a camera of a conventional cooking appliance;
FIG. 6 is a view comparing an exposed state of a light-blocking member in the cooking appliance according to one embodiment of the present disclosure with an exposed state of a shielding member of a light-blocking member in a conventional cooking appliance;
FIG. 7 is a side cross-sectional view illustrating an internal structure of a cooking appliance according to another embodiment of the present disclosure;
FIG. 8 is a side cross-sectional view illustrating the door illustrated in FIG. 7 in a separated state;
FIG. 9 is an enlarged view illustrating an enlarged portion IX of FIG. 8;
FIG. 10 is a rear perspective view illustrating a light-blocking member provided in a cooking appliance according to another embodiment of the present disclosure in a separated state;
FIG. 11 is a front perspective view of the light-blocking member illustrated in FIG. 10;
FIG. 12 is a view illustrating another example of a coupling structure between the light-blocking member and the camera;
FIG. 13 is a cross-sectional view illustrating an air flow inside the door;
FIG. 14 is a cross-sectional view illustrating an enlarged portion XIV of FIG. 13; and
FIG. 15 is a cross-sectional view schematically illustrating an operation of a light-blocking member according to one embodiment of the present disclosure.

### DETAILED DESCRIPTION

The above-described aspects, features and advantages are specifically described hereafter with reference to accompanying drawings such that one having ordinary skill in the art to which the disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague.* Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be thorough and complete and fully convey its scope to one having ordinary skill in the art. Accordingly, *all modifications, equivalents or replacements as well as a replacement of the configuration of any one embodiment with the configuration of another embodiment or an addition of the configuration of any one embodiment to the configuration of another embodiment, within* the technical spirit and scope of the disclosure, *are to be included in* the scope of the disclosure.

The accompanying drawings are provided for a better understanding of the embodiments set forth herein and are not intended to limit the technical spirit of the disclosure. It is to be understood that *all the modifications, equivalents or replacements within* the spirit and technical scope of the disclosure *are included in* the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on the floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the cooking appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### [Entire structure of cooking appliance]

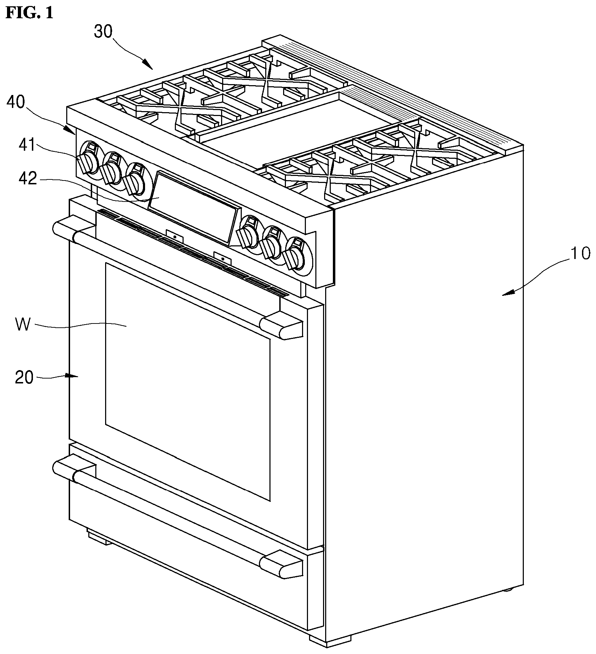

Referring to FIGS. 1 to 3, a cooking appliance may have an exterior formed by a main body 10. The main body 10 may be provided in a form including a substantially box-shape, and may be formed of a material having a predetermined strength so as to protect a plurality of components installed in an inner space thereof.

The main body 10 includes a cavity 11 forming a framework of the main body 10. The cavity 11 may be formed in a form of a hexahedron having a front side open, and a cooking chamber 10a is provided inside the cavity 11.

The cavity 11 may be formed in a form of a hexahedron having a front side open, and the cooking chamber 10a may be formed inside the cavity 11. That is, the cooking chamber 10a may be formed as a substantially hexahedral space arranged inside the cavity 11 and may be formed as a space opened forward.

In a state in which such a cooking chamber 10a is shielded, the inside of the cooking chamber 10a may be heated, whereby food may be cooked. That is, in the cooking appliance of the present embodiment provided as a sealed cooking appliance, the cooking chamber 10a is substantially a space in which food is cooked.

The cooking appliance includes a heating part for heating a cooking chamber 10a. The heating part may be provided as a heating device using gas fuel. As another example, the heating part may be provided as a heater using electricity. As described above, a structure of the heating part may be changed depending on a type of a heat source used.

In the present embodiment, the heating part is illustrated as being provided as a heating device using gas fuel. According to this, a broil burner may be provided above the cooking chamber 10a, and a convection device 13 may be provided at a rear side of the cooking chamber 10a.

The broil burner may heat an internal space of the cooking chamber 10a from an upper side. In addition, the convection device 13 may uniformly heat the internal space of the cooking chamber 10a by suctioning air in the internal space of the cooking chamber 10a, heating the air, and then discharging the heated air into the internal space of the cooking chamber 10a while allowing the air to flow.

The cooking appliance may include a door 20 configured to selectively open and close the cooking chamber 10a and provided to be pivotable. As an example, the door 20 may be provided in a pull-down manner in which an upper portion thereof pivots upward and downward about a lower end to open and close the cooking chamber 10a.

A cooktop part 30 provided to cook food by heating food or a container containing food may be arranged on an upper portion of the main body 10. The cooktop part 30 may be provided with a top plate forming an upper exterior and closing an upper end of the main body 10.

At least one heating part for heating food to be cooked or a container containing the food may be provided in a central portion of the cooktop part 30. For example, the heating part may be provided as a heating device using gas fuel.

As another example, the heating part may be provided as an induction heater using electricity. As such, a structure of the heating part may be changed depending on a type of a heat source used.

A control panel 40 may be provided at an upper front portion of a cooking appliance, that is, at an upper front portion of a cavity 11. The control panel 40 may form a portion of a front exterior of the cooking appliance. The control panel 40 may include a knob 41 for adjusting an operation of the cooking appliance, a display 42 displaying an operation state of the cooking appliance, and the like.

The cooking appliance of the present embodiment may include a rack 15 provided for placing food thereon. As an example, the rack 15 may be formed in a shape corresponding to a bottom surface shape of the cooking chamber 10a, for example, a substantially rectangular planar shape.

The rack 15 may support food from below and may be placed inside the cooking chamber 10a. The rack 15 may be used to place food supported on the rack 15 at a height desired by a user, and may be placed inside the cooking chamber 10a or drawn out to outside the cooking chamber 10a as needed.

In order for the rack 15 to be placed inside the cooking chamber 10a, support protrusions 12 may be provided inside the cooking chamber 10a. The support protrusions 12 may be respectively provided on both side walls of a cavity 11 forming both side surfaces of the cooking chamber 10a.

Each of the support protrusions 12 may be formed to protrude from a side wall of the cavity 11 toward an inside of the cooking chamber 10a. That is, each of the support protrusions 12 may be formed in a shape protruding convexly in a lateral direction from the side wall of the cavity 11 toward the cooking chamber 10a.

A plurality of support protrusions 12 are arranged along a up-down direction, and a plurality of support protrusions 12 may be provided on each side wall of the cavity 11 adjacent thereto. The support protrusions 12 provided on each side wall of the cavity 11 may be arranged to be spaced apart from other support protrusions 12 in the up-down direction by a predetermined interval.

In the present embodiment, seven support protrusions 12 are illustrated as being arranged on each side wall of the cavity 11. However, the present disclosure is not limited thereto, and the number of the support protrusions 12 may be increased or decreased as necessary in consideration of a size of a cooking appliance, or the like.

The rack 15 may be seated on any one of the support protrusions 12 arranged in a up-down direction and may be placed inside the cooking chamber 10a. A placement position of the rack 15 may vary depending on which one of the support protrusions 12 the rack 15 is seated on.

For example, when the rack 15 is seated on a support protrusion 12 arranged at a lowest position among the support protrusions 12, the rack 15 may be expressed as being placed at a first level. As another example, when the rack 15 is seated on a support protrusion 12 arranged at a third position from below among the support protrusions 12, the rack 15 may be expressed as being placed at a third level.

### [Structure of door]

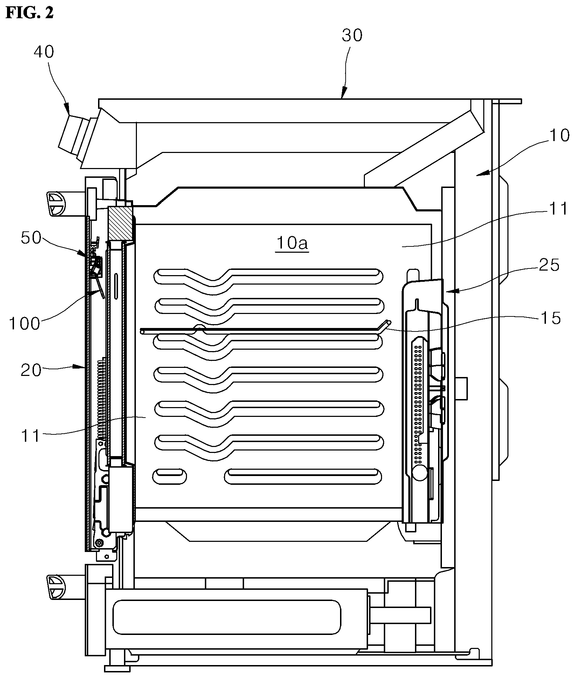

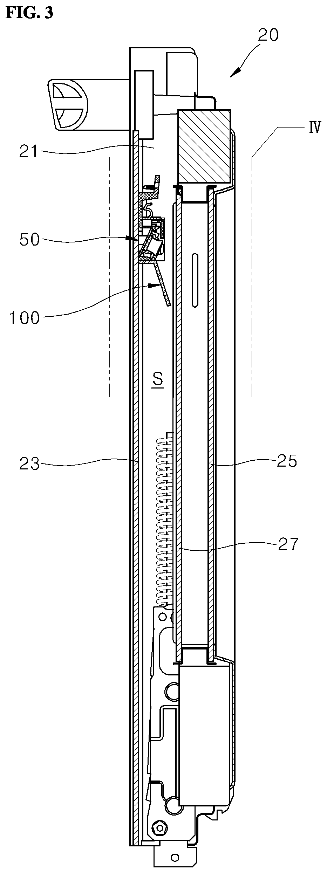

FIG. 3 is a side cross-sectional view illustrating the door illustrated in FIG. 2 in a separated state.

Referring to FIGS. 2 to 3, the door 20 may include a door frame 21 and an outer glass 23.

The door frame 21 forms a framework of the door 20, and may form an upper surface, a lower surface, and side appearances of the door 20. The door frame 21 may be formed in a hexahedral shape having front and rear sides opened.

A hinge for pivotably coupling the door frame 21 to the main body 10 may be installed at a lower side of the door frame 21. The hinge may be installed at a lower end of the door frame 21, and may be respectively installed at both lateral sides of the door frame 21.

A through-hole may be provided in the door frame 21, and the through-hole may be formed in a hollow shape penetrating the door frame 21 in a front-rear direction. The door frame 21 including the through-hole may be formed in a substantially " 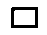 "-shaped configuration.

A transparent window W may be formed at a portion where the through-hole is formed. The outer glass 23 is arranged at the front side of the main body 10, and may form at least a portion of the transparent window W. As an example, the outer glass 23 may be provided in a form including a glass through which the cooking chamber 10a is visible from outside the door 20.

The outer glass 23 may cover the through-hole and may be coupled to the door frame 21. The outer glass 23 is arranged at a foremost front side of the transparent window W to form a front surface of the transparent window W, and together with the door frame 21, may form a front exterior appearance of the door 20.

In addition, the door 20 may further include at least one inner glass 25, 27. The inner glasses 25 are arranged between the outer glass 23 and the main body 10, and together with the outer glass 23, may form the transparent window W. As an example, the inner glasses 25, similarly to the outer glass 23, may be provided in a form including glasses through which the cooking chamber 10a is visible from outside the door 20.

In the present embodiment, the door 20 is illustrated as having three glasses arranged therein. For example, when the transparent window W is formed by three glasses, two inner glasses 25, that is, a rear glass 25 and a mid glass 27, may be arranged between the outer glass 23 and the main body 10.

The rear glass 25 may be coupled to the door frame 21 at a rear side of the door frame 21 and may form a rear exterior appearance of the door 20. In a front-rear direction, the mid glass 27 may be arranged between the outer glass 23 and the rear glass 25. The mid glass 27 may be coupled to the door frame 21 between the outer glass 23 and the rear glass 25.

In the present embodiment, one mid glass 27 is illustrated as being provided between the outer glass 23 and the rear glass 25. As another example, two or more mid glasses 27 may be provided between the outer glass 23 and the rear glass 25.

By the glasses 23, 25, 27 provided in the door 20 as described above, an interior of the door 20 may be partitioned into a plurality of spaces arranged in the front-rear direction. The glasses 23, 25, 27 arranged as described above may form the transparent window W allowing a user to check an inside of the cooking chamber 10a, and at the same time, may suppress heat transmitted from inside the cooking chamber 10a to the door 20 from being transmitted to a front side of the door 20.

External air may flow into the interior of the door 20 in which the mid glasses 27 are arranged as described above. For example, external air may flow into the interior of the door 20 through an opened upper end of the door 20. As described above, air flowing into an interior of the door 20 may pass through the interior of the door 20 and may cool the door 20.

### [Structure of camera]

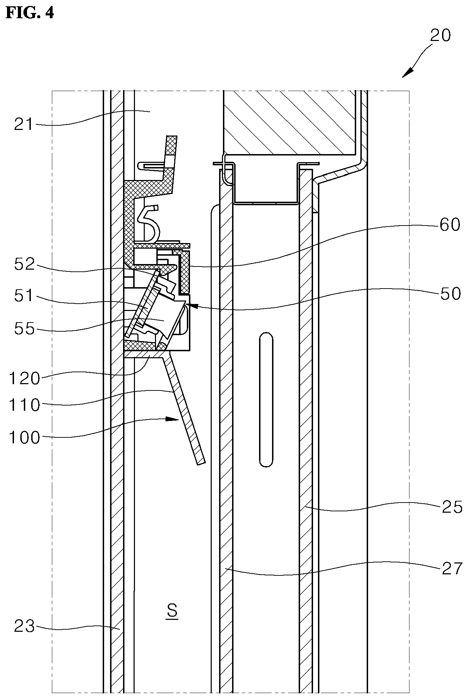

FIG. 4 is an enlarged view illustrating an enlarged portion IV of FIG. 3.

The cooking appliance of the present embodiment may include a camera 50, as illustrated in FIGS. 2 to 4. The camera 50 may be installed inside the cooking appliance and may be provided to image the cooking chamber 10a.

The camera 50 may be arranged at a front side of the cooking chamber 10a. As an example, the camera 50 may be installed in the door 20. The camera 50 may acquire images related to food accommodated in the cooking chamber 10a by imaging an inside of the cooking chamber 10a from an upper front side of the cooking chamber 10a.

The camera 50 may include an image processing part 51. The image processing part 51 may include one or more image sensors. As the image sensors, a CCD, a CMOS, or the like may be used. As an example, the image sensor may be provided in a form mounted on a circuit board 52. In this case, the image sensor may be arranged on a rear surface of the circuit board 52 facing the cooking chamber 10a.

In addition, the camera 50 may include a lens part 55. The lens part 55 may include at least one lens. As an example, the lens part 55 may be provided in a form in which a plurality of lenses arranged along a front-rear direction are accommodated in a barrel.

The lens part 55 collects light reflected from an object to form an optical image on an imaging area, and the image sensor may receive light incident through the lens part 55 and convert the light into an image signal.

In addition, the camera 50 may further include various processors necessary for forming an image based on the image signal output from the image sensor, and may further include lighting composed of an LED or the like.

The camera 50 may be arranged inside the door 20. The camera 50 may be arranged in an area of the door 20 in which the transparent window W is formed.

More specifically, the camera 50 may be arranged between the outer glass 23 and the mid glass 27. That is, the camera 50 may be arranged inside the door 20 and arranged in a space S formed between the outer glass 23 and the mid glass 27 spaced apart from each other in a front-rear direction.

This space, since being a space arranged at a position relatively farther from the cooking chamber 10a than a space between the inner glass 25 and the mid glass 27, makes it preferable that the camera 50 is arranged in this space in order for the camera 50 to be less affected by influences transmitted from the cooking chamber 10a.

The camera 50 arranged inside the door 20 as described above may receive light passing through the inner glasses 25 and the mid glass 27 from inside the cooking chamber 10a and may image the inside of the cooking chamber 10a.

As an example, the camera 50 may be arranged at a position biased upward from a center of the door 20 in an up-down direction. The camera 50 may also be arranged at a position biased upward from a center of the cooking chamber 10a in an up-down direction. In a left-right direction, the camera 50 may be arranged substantially at a center of the door 20.

The camera 50 arranged as described above may be provided to face the cooking chamber 10a from a front side of the cooking chamber 10a and to look down at the cooking chamber 10a from a front side of an upper region of the cooking chamber 10a. In addition, the camera 50 may be arranged at a position biased upward in the transparent window W.

Accordingly, the camera 50 may not only be arranged at a position at which food inside the cooking chamber 10a may be effectively imaged, but also be arranged at a position at which a viewing area of the transparent window W is less blocked.

The camera 50 images an inside of the cooking chamber 10a and may image an area falling within a field of view of the camera 50. In the present embodiment, the field of view of the camera 50 is illustrated as being set as follows.

In a up-down direction, the field of view of the camera 50 may be set such that both a front-side end of the rack 15 placed at a lowermost level, for example, a first level, and a front-side end of the rack 15 placed at an uppermost level, for example, a seventh level, are included in an imaging range of the camera 50. In addition, in a left-right direction, the field of view of the camera 50 may be set such that both a left end and a right end of the rack 15 are included in the imaging range of the camera 50.

Meanwhile, the cooking appliance of the present embodiment may further include a support member 60. The support member 60 may be provided to fix the camera 50 inside the door 20. In the present embodiment, the support member 60 is illustrated as being fixed to the outer glass 23.

### [First embodiment of light-blocking member]

The cooking appliance of the present embodiment may include a light-blocking member 100 installed inside the door 20. The light-blocking member 100, similarly to the camera 50, may be arranged in an area of the door 20 in which the transparent window W is formed.

In the present embodiment, the light-blocking member 100 is illustrated as being arranged at a position adjacent to the camera 50 and arranged at a lower side of the camera 50. According to this, the camera 50 is arranged adjacent to an uppermost boundary surface of the transparent window W, and the light-blocking member 100 may be arranged at a lower side of the camera 50. At this time, the light-blocking member 100 may be arranged in close contact with a lower end of a support member 60 supporting the camera 50.

As another example, the light-blocking member 100 may be arranged at an upper side of the camera 50, or may be arranged at both an upper side and a lower side of the camera 50. When the light-blocking member 100 is arranged at the upper side of the camera 50, the light-blocking member 100 may be arranged between the uppermost boundary surface of the transparent window W and the camera 50.

The light-blocking member 100 may be arranged in a space S between the outer glass 23 and the inner glasses 25 (hereinafter referred to as an accommodation space). As an example, the light-blocking member 100 may be arranged together with the camera 50 in a space formed between the outer glass 23 and the mid glass 27. The light-blocking member 100 may be arranged in the same space as the camera 50 and may be arranged adjacent to the camera 50.

As such, the light-blocking member 100 arranged inside the door 20 may be arranged to block between the outer glass 23 and the inner glasses 25. As an example, the light-blocking member 100 may be arranged to block between the outer glass 23 and the mid glass 27.

The light-blocking member 100 may form a blocking wall blocking a movement path of light moving from a front side of the door 20 through the outer glass 23 toward the inner glasses 25. As an example, the light-blocking member 100 may form a blocking wall blocking a movement path of light toward an area within a field of view of the camera 50 from a lower side of the camera 50.

The light-blocking member 100 may include a first light-blocking part 110. The first light-blocking part 110 may form a blocking wall blocking between the outer glass 23 and the inner glasses 25, and more specifically, between the outer glass 23 and the mid glass 27.

As an example, the first light-blocking part 110 may form a substantially lateral plane and may form an inclined surface that becomes farther from the outer glass 23 toward a rear side. That is, the first light-blocking part 110 may form an inclined surface slanted downward toward a rear side.

In other words, the first light-blocking part 110 may form a plane blocking between the outer glass 23 and the mid glass 27 and may form an inclined surface that becomes farther from the outer glass 23 toward a lower side.

At least a part of the first light-blocking part 110 may be arranged between the camera 50 and the inner glasses 25. That is, in a front and rear direction, at least a part of the first light-blocking part 110 may be arranged between the camera 50 and the inner glasses 25. For example, a lower end of the first light-blocking part 110 may be arranged between the camera 50 and the mid glass 27.

The light-blocking member 100 may further include an upper surface part 120. The upper surface part 120 may be arranged at an upper side of the first light-blocking part 110 and may form an upper surface of the light-blocking member 100. The first light-blocking part 110 may be provided in a form protruding downward from the upper surface part 120.

As an example, an upper end of the first light-blocking part 110 may be connected to a rear end of the upper surface part 120. In addition, the first light-blocking part 110 may extend obliquely from the upper surface part 120 in a direction between a rear side and a lower side.

### [Operation and effects of light-blocking member]

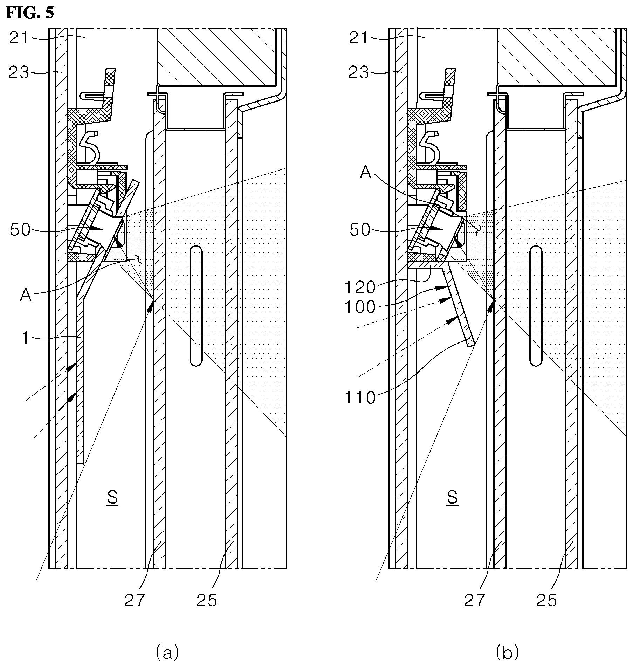

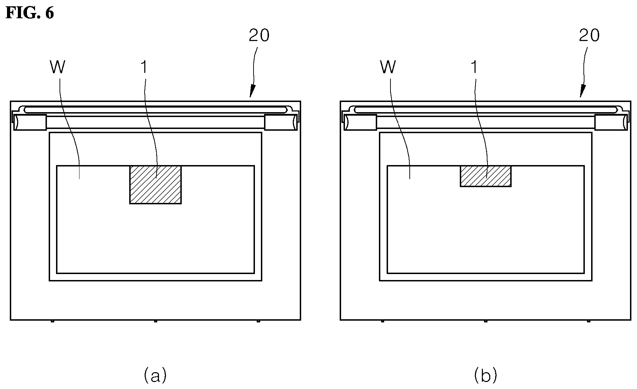

FIG. 5 is a view comparing a structure around a camera of a cooking appliance according to one embodiment of the present disclosure with a structure around a camera of a conventional cooking appliance, and FIG. 6 is a view comparing an exposed state of a light-blocking member in the cooking appliance according to one embodiment of the present disclosure with an exposed state of a shielding member of a light-blocking member in a conventional cooking appliance.

Hereinafter, operation and effects of the cooking appliance according to one embodiment of the present disclosure will be described with reference to FIGS. 2 to 6.

Referring to FIGS. 2 to 4, the camera 50 and the light-blocking member 100 according to the present embodiment may be arranged in an area of the door 20 in which the transparent window W is formed and may be arranged inside the door 20, that is, in the accommodation space S.

When viewed in a lateral direction, the light-blocking member 100 may be arranged below the camera 50. The light-blocking member 100 may form a blocking wall blocking between the outer glass 23 and the mid glass 27 in a space between the outer glass 23 and the mid glass 27, that is, the accommodation space S.

As an example, as illustrated in (b) of FIG. 5, the light-blocking member 100 may form a blocking wall blocking a movement path of light toward an area within a field of view of the camera 50 from a lower side of the camera 50. Preferably, the light-blocking member 100 may form a blocking wall blocking a movement path of light moving from a front side of the outer glass 23 to an area in which the accommodation space S and a field of view of the camera 50 overlap.

Light emitted from an external light source may pass through the outer glass 23 from a front side of the door 20 and then be reflected by the inner glasses 25. When light passing through the outer glass 23 from the front side of the door 20 enters an area S1 in which the accommodation space S and the field of view of the camera 50 overlap (hereinafter referred to as an overlapping area), there is a high possibility that the light reflected by the inner glasses 25 after entering this area is captured by the camera 50.

For example, light passing through the outer glass 23 from a front side of the door 20 may be reflected by the mid glass 27 toward the camera 50 within the overlapping area S1, and the light reflected in this manner may be captured by the camera 50.

When light reflected within the overlapping area S1 is captured by the camera 50 in this manner, a problem may occur in that quality of an image captured by the camera 50 is degraded, such as light blooming, flare phenomena, virtual images, and the like appearing in the image captured by the camera 50.

In consideration of this, in the present embodiment, a blocking wall for blocking a movement path of light moving from a front side of the outer glass 23 to the overlapping area S1 (hereinafter referred to as an external light movement path) may be formed by the light-blocking member 100.

According to this, the light-blocking member 100 may form a blocking wall blocking a movement path of light moving from a front side of the door 20 and from a lower side of the camera 50 to the overlapping area S1 at a lower side of the camera 50.

According to the present embodiment, the light-blocking member 100 may form a blocking wall blocking the external light movement path at a position spaced apart from the outer glass 23 by a predetermined distance. As an example, the light-blocking member 100 may be arranged at a position at which at least a part of the light-blocking member 100 is arranged between the camera 50 and the inner glasses 25.

For example, a lower end of the light-blocking member 100 may be arranged at a position protruding farther rearward than the camera 50. In addition, an upper end of the light-blocking member 100 may be arranged at a position spaced rearward from the outer glass 23 by approximately a front-rear direction length of the upper surface part 120.

When the light-blocking member 100 is arranged at a position spaced rearward from the outer glass 23 in this manner, an up-down direction length of the light-blocking member 100 may be reduced compared to a case in which the light-blocking member 100 is arranged at a position in close contact with the outer glass 23.

In (a) of FIG. 5, a form in which a shielding member 1 is arranged at a position very adjacent to the outer glass 23 is illustrated. In order for movement of light along the external light movement path to be properly blocked by the shielding member 1, as a position of the shielding member 1 becomes closer to the outer glass 23, an up-down direction length of the shielding member 1 should be increased.

That is, as the position of the shielding member 1 is biased more forward, the shielding member 1 should be extended farther downward so that movement of external light attempting to enter the overlapping area may be properly blocked.

In this case, as illustrated in (a) of FIG. 6, an up-down direction length of the shielding member 1 exposed through the transparent window W becomes excessively long. The shielding member 1 lengthened in this manner may reduce a viewing area of the transparent window W and make it difficult to check cooking food through the transparent window W, and may also be a cause of degrading front appearance of the cooking appliance.

In contrast, the light-blocking member 100 of the present embodiment illustrated in (b) of FIG. 5 and (b) of FIG. 6 may form a blocking wall blocking the external light movement path at a position spaced rearward from the outer glass 23 by a predetermined distance. Such a light-blocking member 100 may effectively block movement of external light attempting to enter the overlapping area even when being formed with a much shorter length than the shielding member 1 illustrated in (a) of FIG. 5 and (a) of FIG. 6.

In this case, an up-down direction length of the light-blocking member 100 exposed through the transparent window W may be significantly shorter than that of the shielding member 1 arranged in close contact with the outer glass 23 (see (a) and (b) of FIG. 6).

The light-blocking member 100 of the present embodiment provided as described above may effectively block movement of external light attempting to enter the overlapping area while suppressing exposure of the light-blocking member 100 through the transparent window W.

The cooking appliance of the present embodiment including the light-blocking member 100 may minimize reduction of a viewing area of the transparent window W due to the light-blocking member 100 and may allow checking of cooking food through the transparent window W to be effectively performed, and may also minimize degradation of front appearance of the cooking appliance due to existence of the light-blocking member 100.

### [Second embodiment of light-blocking member]

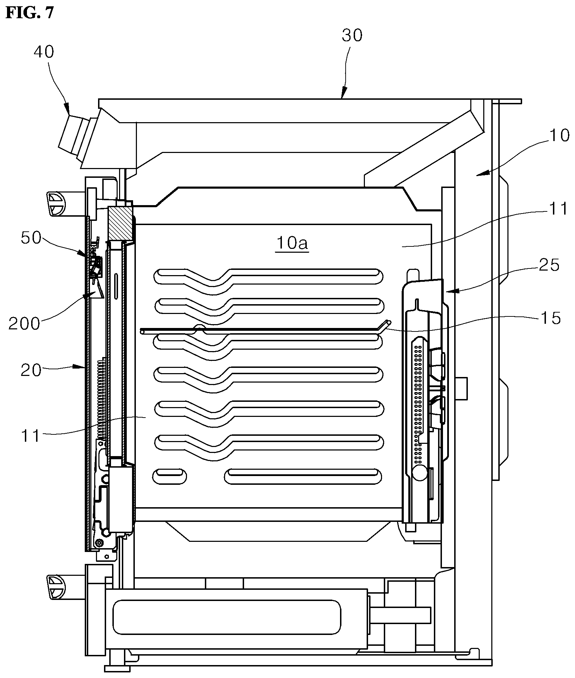

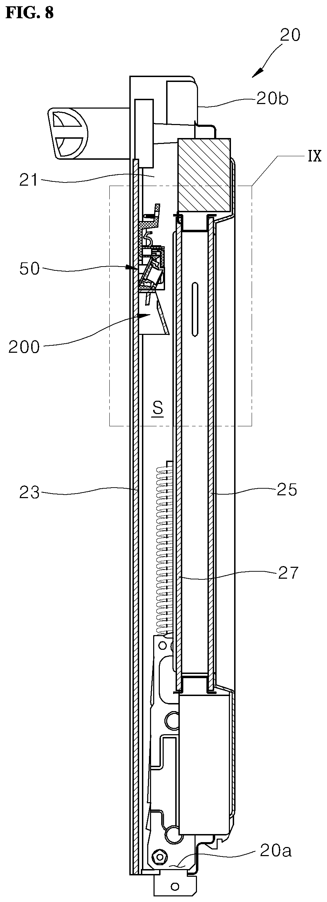

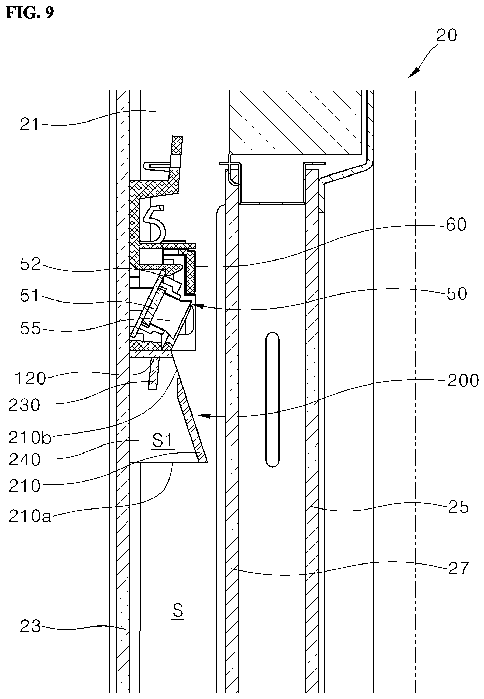

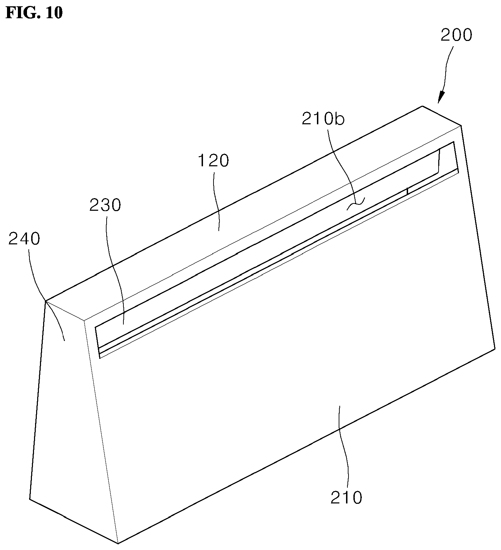

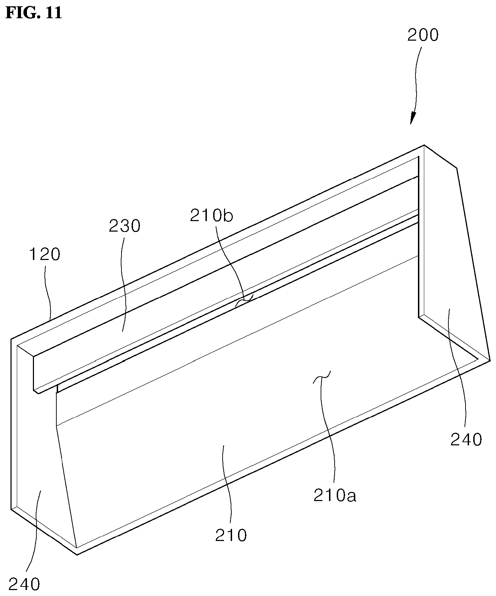

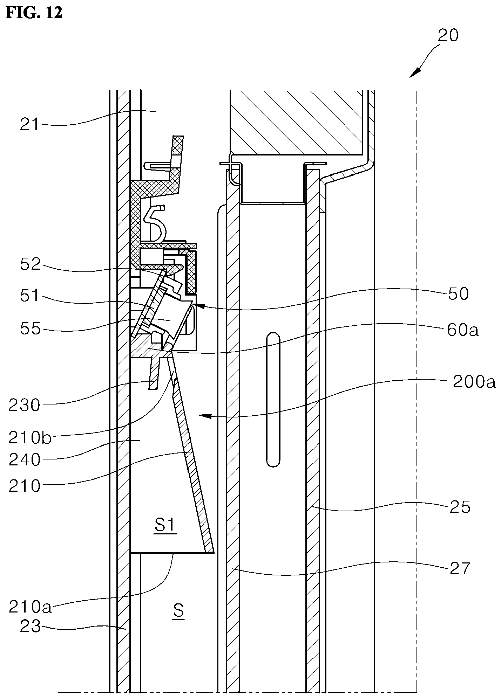

FIG. 7 is a side cross-sectional view illustrating an internal structure of a cooking appliance according to another embodiment of the present disclosure, FIG. 8 is a side cross-sectional view illustrating the door illustrated in FIG. 7 in a separated state, and FIG. 9 is an enlarged view illustrating an enlarged portion IX of FIG. 8. In addition, FIG. 10 is a rear perspective view illustrating a light-blocking member provided in a cooking appliance according to another embodiment of the present disclosure in a separated state, FIG. 11 is a front perspective view of the light-blocking member illustrated in FIG. 10, and FIG. 12 is a view illustrating another example of a coupling structure between the light-blocking member and the camera.

Referring to FIG. 7, an inlet 20a may be provided in the door 20. The inlet 20a may be arranged at a lower portion of the door 20. The inlet 20a may form a passage opening an inside of the door 20 at the lower portion of the door 20.

The inlet 20a may be formed to penetrate through a lower end of the door 20 in an up-down direction or may be formed to penetrate through a rear surface of the door 20 in a front and rear direction. An inside of the door 20, particularly the accommodation space S, may be opened to outside of the door 20 from a lower portion of the door 20 through the inlet 20a.

An exhaust port 20b may be further provided in the door 20. The exhaust port 20b may be arranged at an upper portion of the door 20. The exhaust port 20b may form a passage opening an inside of the door 20 at the upper portion of the door 20.

The exhaust port 20b may be formed to penetrate through an upper end of the door 20 in an up-down direction or may be formed to penetrate through a rear surface of the door 20 in a front and rear direction. An inside of the door 20, particularly the accommodation space S, may be opened to outside of the door 20 from an upper portion of the door 20 through the exhaust port 20b.

External air may flow into the inside of the door 20 through the inlet 20a, and the external air flowing into the inside of the door 20 may move upward inside the door 20 and then be discharged to outside of the door 20 through the exhaust port 20b.

Referring to FIGS. 7 to 11, a light-blocking member 200 according to another embodiment of the present disclosure may be arranged in the accommodation space S and may be arranged between the inlet 20a and the exhaust port 20b. The light-blocking member 200 may include a first light-blocking part 210 and opening parts 210a, 210b.

The first light-blocking part 210 may be formed in a shape similar to the first light-blocking part 110 (see FIG. 4) of the light-blocking member 100 (see FIG. 4) illustrated in the above-described embodiment. That is, the first light-blocking part 210 may be arranged in the accommodation space S and may form a blocking wall blocking between the outer glass 23 and the inner glasses 25. The first light-blocking part 210 may form an inclined surface slanted downward toward a rear side.

The opening parts 210a, 210b may include a first opening part 210a. The first opening part 210a may open between the outer glass 23 and the first light-blocking part 210 in an up-down direction. An inner space S1 surrounded by the outer glass 23, the upper surface part 120, and the first light-blocking part 210 may be formed at a front side of the first light-blocking part 210, and the first opening part 210a may open the inner space S1 toward a lower side.

The opening parts 210a, 210b may further include a second opening part 210b. The second opening part 210b may open between the first light-blocking part 210 and a second light-blocking part 230 to be described later in an up-down direction at an upper side or a lower side of the first opening part 210a.

In the present embodiment, the light-blocking member 200 is illustrated as being arranged at a lower side of the camera 50. In the light-blocking member 200, the second opening part 210b may open the inner space S1 toward an upper side at an upper side of the first opening part 210a.

According to the present embodiment, the first light-blocking part 210 may be provided in a form protruding downward from the upper surface part 120. In addition, the second opening part 210b may be provided in the first light-blocking part 210 or may be provided between the upper surface part 120 and the first light-blocking part 210.

When the second opening part 210b is provided between the upper surface part 120 and the first light-blocking part 210, the second opening part 210b may be arranged at an upper side of the first light-blocking part 210. That is, in an up-down direction, the second opening part 210b may be arranged between the camera 50 and the first light-blocking part 210.

When the second opening part 210b is provided in the first light-blocking part 210, the second opening part 210b may be formed in a form in which a portion of the first light-blocking part 210 is cut. For example, the second opening part 210b may be formed in a form penetrating a portion of the first light-blocking part 210 in a front and rear direction or in an up-down direction.

In the present embodiment, the second opening part 210b is illustrated as being formed in a form penetrating a portion of the first light-blocking part 210 forming an inclined surface in both the front and rear direction and the up-down direction. The second opening part 210b formed in this manner may be arranged at a position closer to an upper end than to a lower end of the first light-blocking part 210.

The light-blocking member 200 may further include a second light-blocking part 230. In a front and rear direction, the second light-blocking part 230 may be arranged between the outer glass 23 and the first light-blocking part 210. The second light-blocking part 230 may form a blocking wall blocking between the outer glass 23 and the inner glasses 25 at an upper side or a lower side of the first light-blocking part 210.

The first light-blocking part 210 and the second light-blocking part 230 may be arranged to be spaced apart from each other in the front and rear direction. The second opening part 210b formed between the first light-blocking part 210 and the second light-blocking part 230 may open between the first light-blocking part 210 and the second light-blocking part 230 in the up-down direction. Air flowing into the inner space S1 through the first opening part 210a may move to outside of the light-blocking member 200 through the second opening part 210b.

The second light-blocking part 230 may be arranged at a position closer to an upper end than to a lower end of the first light-blocking part 210. That is, the second light-blocking part 230 may be arranged at a position biased upward from a center of the light-blocking member 200 in an up-down direction. The second light-blocking part 230 may be arranged to block between the outer glass 23 and the second opening part 210b.

In the present embodiment, the second light-blocking part 230 is illustrated as being arranged at an upper side of the first light-blocking part 210. The second light-blocking part 230 may be arranged at a front side of the second opening part 210b and may form a blocking wall blocking between the outer glass 23 and the second opening part 210b.

The second light-blocking part 230 may form a blocking wall blocking the external light movement path and may be arranged to block a portion of the external light movement path that is opened by the second opening part 210b.

The upper surface part 120 forming an upper surface of the light-blocking member 200 may be arranged between the outer glass 23 and the first light-blocking part 210 and may be arranged at an upper side of the opening parts 210a, 210b. The second light-blocking part 230 may be arranged in a space surrounded by the outer glass 23, the upper surface part 120, and the first light-blocking part 210, that is, the inner space S1.

In addition, the light-blocking member 200 may further include side surface parts 240. The side surface parts 240 may connect the upper surface part 120 and the first light-blocking part 210 at lateral sides of the first light-blocking part 210. As an example, a pair of side surface parts 240 may be arranged to be spaced apart from each other in a lateral direction with the first light-blocking part 210, the second light-blocking part 230, and the upper surface part 120 therebetween, and the pair of side surface parts 240 may form both side surfaces of the light-blocking member 200.

As an example, the second light-blocking part 230 may be connected to the upper surface part 120 at a lower side of the upper surface part 120 and simultaneously connected to the side surface part 240 in a lateral direction. In this case, the light-blocking member 200 may be provided in a form in which the first light-blocking part 210, the second light-blocking part 230, the upper surface part 120, and the side surface part 240 are integrally formed. As another example, the second light-blocking part 230 may be connected to only one of the upper surface part 120 and the side surface part 240.

The light-blocking member 200 may be arranged adjacent to the camera 50 and may be fixed to the door 20 through a support member 60 supporting the camera 50. As an example, the light-blocking member 200 may be coupled to the support member 60 by coupling the upper surface part 120 of the light-blocking member 200 to a lower surface of the support member 60. The light-blocking member 200 coupled to the support member 60 in this manner may be fixed to the outer glass 23 by the support member 60.

As another example, as illustrated in FIG. 12, at least a part of a light-blocking member 200a and a support member 60a may be integrally formed. For example, the upper surface part of the light-blocking member 200a and a lower surface of the support member 60a may be integrally formed, and an entirety of the light-blocking member 200a and an entirety of the support member 60a may be integrally formed.

The light-blocking member 200a integrally formed with the support member 60a in this manner may be provided as one part having both a function of supporting the camera 50 and a function of blocking an external light movement path.

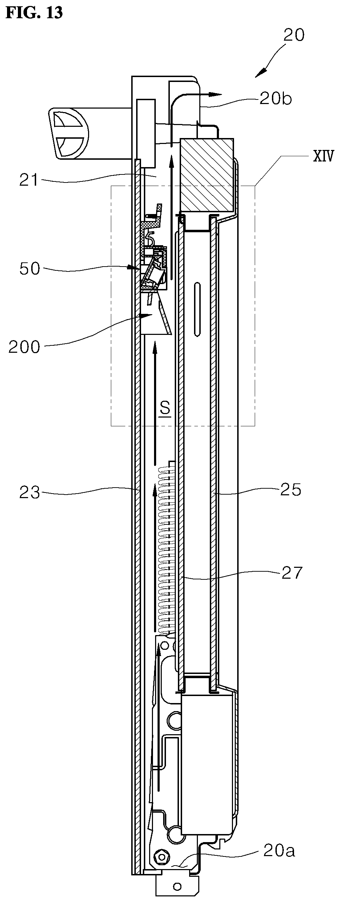

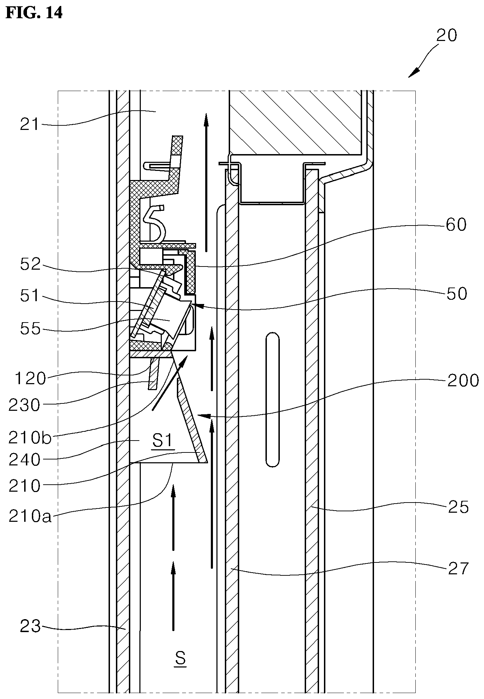

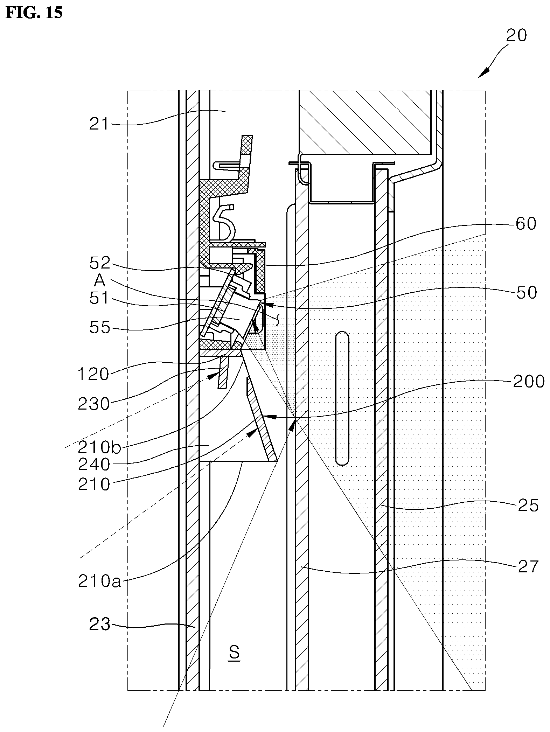

FIG. 13 is a cross-sectional view illustrating an air flow inside the door, FIG. 14 is a cross-sectional view illustrating an enlarged portion XIV of FIG. 13, and FIG. 15 is a cross-sectional view schematically illustrating an operation of a light-blocking member according to one embodiment of the present disclosure.

Hereinafter, operation and effects of the light-blocking member according to another embodiment of the present disclosure will be described with reference to FIGS. 7 and 13 to 15.

The cooking appliance according to the present embodiment as illustrated in FIG. 7 may provide an automatic cooking function using the camera 50. The cooking appliance may analyze food-related images or videos acquired by the camera 50 to determine a type and a size of food or to determine a cooking progress degree of the food, and may control a cooking operation of the cooking appliance based on information analyzed in this manner.

Meanwhile, referring to FIGS. 13 and 14, air inside the door 20 heated by heat transmitted from the cooking chamber 10a during a cooking process may be discharged to outside of the door 20 through the exhaust port 20b provided at an upper side of the door 20.

As hot air inside the door 20 is discharged, external air located at a lower front side of the cooking appliance may flow into the inside of the door 20 through the inlet 20a provided at a lower portion of the door 20 and may rise upward. In this process, the door 20 heated by heat transmitted from the cooking chamber 10a to the door 20 may be cooled.

External air flowing into the inside of the door 20, that is, the accommodation space S, may move upward and may contact the light-blocking member 200, and may move toward a camera 50 side by passing through the light-blocking member 200. The opening parts 210a, 210b and the inner space S1 formed in the light-blocking member 200 may provide a passage through which external air passes through the light-blocking member 200.

External air rising toward the light-blocking member 200 from a lower side of the light-blocking member 200 may flow into the inside of the light-blocking member 200 through the first opening part 210a. Air flowing into the inner space S1 may be discharged to outside of the light-blocking member 200 through the second opening part 210b. That is, air rising in the accommodation space S may pass through the light-blocking member 200 through the first opening part 210a, the inner space S1, and the second opening part 210b and may move toward the camera 50.

Air that has passed through the light-blocking member 200 and moved toward the camera 50 side in this manner may pass around the camera 50 to cool the camera 50 and then be discharged to outside of the door 20 through the exhaust port 20b.

The opening parts 210a, 210b and the inner space S1 formed in the light-blocking member 200 may reduce flow resistance inside the door 20 and may form a passage required for a cooling airflow for cooling the camera 50 to pass through the light-blocking member 200.

According to the present embodiment, the camera 50 may be disposed in a space formed between the outer glass 23 and the mid glass 27 and may be arranged at a position closer to the outer glass 23 than the mid glass 27. Preferably, the camera 50 may be installed on the outer glass 23 in a form of being coupled to a rear surface of the outer glass 23.

The camera 50 installed in the door 20 as described above may be disposed at a position farthest from the cooking chamber 10a among interior portions of the door 20.

While cooking is performed in the cooking chamber 10a, an interior of the cooking chamber 10a is heated to a high temperature, and heat inside the cooking chamber 10a is transmitted to the door 20. A portion of the door 20 closer to the cooking chamber 10a, that is, a portion closer to a rear side of the door 20, is more greatly affected by heat transmitted from the cooking chamber 10a to the door 20.

Accordingly, a temperature of the mid glass 27 is lower than a temperature of the rear glass 25, and a temperature of the outer glass 23 and surroundings thereof is lower than a temperature of the mid glass 27.

In consideration of this, in the present embodiment, the camera 50 is installed on the outer glass 23 arranged at a position farthest from the cooking chamber 10a among interior portions of the door 20. Accordingly, the camera 50 may be arranged at a position inside the door 20 at which the camera 50 may be least affected by heat.

In addition, the camera 50 arranged at the position inside the door 20 at which the camera 50 may be least affected by heat as described above may be cooled by air flowing upward inside the door 20.

That is, since the camera 50 is arranged at the position inside the door 20 at which the camera 50 may be least affected by heat and cooling of the camera 50 is performed by air flowing upward inside the door 20, influence of heat applied to the camera 50 provided for imaging the cooking chamber 10a may be effectively reduced.

Cooling of the camera 50 may be performed by a flow of air moving upward at a position adjacent to the outer glass 23. In addition, a part of a flow of air flowing into the inside of the door 20 may move upward through a space between the light-blocking member 200 and the mid glass 27. Such a flow of air may move upward at a position adjacent to the mid glass 27.

For example, a flow of air formed at a position biased to a rear side among flows of air formed inside the door 20 may move upward through a space between the light-blocking member 200 and the mid glass 27.

The flow of air formed in this manner may form an air curtain inside the door 20 blocking between the mid glass 27 and the outer glass 23, and more specifically, between the mid glass 27 and the camera 50.

The air curtain formed in this manner may suppress heat transmitted from the cooking chamber 10a to the mid glass 27 from being transmitted to the outer glass 23 and the camera 50 side.

According to the present embodiment, the camera 50 may be arranged at a position inside the door 20 at which the camera 50 may be least affected by heat, and an air curtain and a cooling air flow may be formed by air flowing upward inside the door 20. Among these, the air curtain may function to suppress transmission of heat to the outer glass 23 and the camera 50 side, and the cooling air flow may function to cool the camera 50 inside the door 20.

That is, the camera 50 may be cooled by the cooling air flow at a position inside the door 20 at which the camera 50 may be least affected by heat, and transmission of heat to the outer glass 23 and the camera 50 side may be suppressed by the air curtain.

Accordingly, the camera 50 imaging the cooking chamber 10a may be installed in an environment in which the camera 50 is less affected by heat, and cooling of the camera 50 installed inside the door 20 may be effectively performed.

Meanwhile, as the second opening part 210b is formed in the light-blocking member 200 as described above, a passage through which the cooling air flow passes through the light-blocking member 200 may be formed in the light-blocking member 200, but a portion of a blocking wall formed by the first light-blocking part 210 may be opened by the second opening part 210b. That is, a portion of an external light movement path blocked by the first light-blocking part 210 may be opened by the second opening part 210b.

Although the second opening part 210b is necessary to improve cooling performance for the camera 50, when the external light movement path is opened by the second opening part 210b, a problem may occur in that quality of an image captured by the camera 50 is degraded.

In consideration of this, in the present embodiment, the light-blocking member 200 may further include the second light-blocking part 230. The second light-blocking part 230 may be arranged at a position spaced forward from the first light-blocking part 210 by a predetermined distance so that a passage formed by the second opening part 210b may be formed between the first light-blocking part 210 and the second light-blocking part 230.

For example, the second light-blocking part 230 may be arranged at a front side of the second opening part 210b and may form a blocking wall blocking between the outer glass 23 and the second opening part 210b. The second light-blocking part 230 arranged at such a position may form a blocking wall blocking the external light movement path, and may form a blocking wall blocking a portion of the external light movement path that is opened by the second opening part 210b.

Accordingly, the external light movement path may be completely blocked by the light-blocking member 200 including the first opening part 210a and the second opening part 210b, and at the same time, a passage necessary for a cooling air flow to pass through the light-blocking member 200 may also be formed in the light-blocking member 200.

That is, the light-blocking member 200 of the present embodiment may provide both a function of blocking the external light movement path and a function of allowing a cooling air flow to pass therethrough. The cooking appliance of the present embodiment including the light-blocking member 200 may provide both an effect of efficiently blocking occurrence of light reflection in the overlapping area S1 and an effect of efficiently improving cooling performance for the camera 50.

The cooking appliance of the present embodiment as described above may provide an effect of allowing quality of an image captured by the camera 50 to be less affected by light emitted from an external light source and allowing quality of the image captured by the camera 50 to be improved, by blocking occurrence of light reflection in an area in which light emitted from the external light source is highly likely to be captured by the camera 50 when the light is reflected.

In addition, the cooking appliance of the present embodiment may allow the camera 50 to operate in an environment in which the camera 50 is less affected by heat, thereby significantly lowering a risk of malfunction or damage of the camera 50.

In addition, the cooking appliance of the present embodiment may allow air flowing inside the door 20 to smoothly pass through the light-blocking member 200, thereby allowing cooling of the camera 50 installed around the light-blocking member 200 inside the door 20 to be effectively performed.

In addition, the cooking appliance of the present embodiment may significantly lower a risk of malfunction or damage of the camera 50 and effectively improve quality of an image captured by the camera 50 by providing both an effect of efficiently blocking occurrence of light reflection in the overlapping area S1 and an effect of efficiently improving cooling performance for the camera 50.

The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

10: main body
10a: cooking chamber
11: cavity
12: support protrusion
13: convection device
15: rack
20: door
20a: inlet
20b: exhaust port
21: door frame
23: outer glass
25: rear glass
27: mid glass
30: cooktop part
40: control panel
41: knob
42: display
50: camera
51: image processing part
52: circuit board
55: lens part
60: support member
100, 200: light-blocking member
110, 210: first light-blocking part
210a: first opening part
210b: second opening part
230: second light-blocking part
240: side surface part
A: overlapping area
S: accommodation space
S1: inner space

## Claims

1. A cooking appliance comprising:
a main body forming a cooking chamber therein;
a door configured to open and close the cooking chamber at a front side of the main body and including an outer glass arranged at the front side of the main body and an inner glass arranged between the main body and the outer glass;
a camera arranged in an accommodation space formed between the outer glass and the inner glass; and
a light-blocking member arranged adjacent to the camera and blocking a portion of a light movement path of light moving from the outer glass toward the inner glass,
wherein at least a portion of the light-blocking member is arranged between the camera and the inner glass or is arranged at a position closer to the inner glass than the outer glass.

2. The cooking appliance of claim 1,
wherein the light-blocking member comprises:
a first light-blocking part arranged in the accommodation space and blocking between the outer glass and the inner glass; and
a second light-blocking part arranged between the outer glass and the first light-blocking part and blocking between the outer glass and the inner glass at an upper side or a lower side of the first light-blocking part.

3. The cooking appliance of claim 2,
wherein the first light-blocking part and the second light-blocking part are arranged to be spaced apart from each other in a front and rear direction, and
the light-blocking member further comprises an opening part opening between the first light-blocking part and the second light-blocking part in an up-down direction.

4. The cooking appliance of claim 3,
wherein the door includes an inlet opening an inside of the door and an exhaust port opening the inside of the door at an upper side of the inlet, and
the light-blocking member is arranged between the inlet and the exhaust port.

5. The cooking appliance of claim 3,
wherein the opening part comprises:
a first opening part opening between the outer glass and the first light-blocking part in an up-down direction; and a second opening part opening between the first light-blocking part and the second light-blocking part in an up-down direction at an upper side or a lower side of the first opening part.

6. The cooking appliance of claim 3,
wherein the first light-blocking part is arranged to block an external light movement path, which is a movement path of light moving from a front side of the outer glass toward an area in which the accommodation space and a field of view of the camera overlap, and
the second light-blocking part is arranged to block a portion of the external light movement path that is opened by the opening part.

7. The cooking appliance of claim 2,
wherein the first light-blocking part is arranged at a lower side of the camera and forms an inclined surface that becomes farther downward from the camera toward a rear side.

8. The cooking appliance of claim 2,
wherein the light-blocking member further comprises an opening part penetrating a portion of the first light-blocking part in a front and rear direction or an up-down direction, and
the opening part is arranged at a position closer to an upper end of the first light-blocking part than a lower end of the first light-blocking part.

9. The cooking appliance of claim 2,
wherein the light-blocking member further comprises an opening part penetrating a portion of the first light-blocking part in a front and rear direction, and
the second light-blocking part is arranged to block between the outer glass and the opening part.

10. The cooking appliance of claim 9,
wherein the light-blocking member further comprises an upper surface part arranged between the outer glass and the first light-blocking part at an upper side of the opening part, and
the second light-blocking part is arranged in a space surrounded by the outer glass, the upper surface part, and the first light-blocking part.
